# EUROPEAN PATENT SPECIFICATION

(11) **EP 1 698 397 B1**
(45) Date of publication and mention of the grant of the patent: **04.05.2011**
(21) Application number: 06251110.0
(22) Date of filing: 01.03.2006
(51) Int. Cl.: B01J 35/04, B01D 39/20, B01D 53/94, F01N 3/28, F01N 3/022, C04B 38/00

(54) **Honeycomb structure**
Wabenstruktur
Structure en nid d'abeille

(30) Priority: 04.03.2005 JP 2005060087
(43) Date of publication of application: 06.09.2006
(73) Proprietor: NGK Insulators, Ltd., Nagoya-City, Aichi Pref. 467-8530 (JP)
(72) Inventor: Aoki, Takashi NGK Insulators, LTD, Mizuho-ku Nagoya City Aichi-ken 467-8530 (JP)
(74) Representative: Paget, Hugh Charles Edward

(56) References cited:
- EP-A- 1 138 389
- EP-A- 1 586 547
- EP-A- 1 600 434
- JP-A- 55 142 189
- US-A1- 2005 025 933

## Description

### BACKGROUND OF THE INVENTION

### Field of the Invention

The present invention relates to a honeycomb structure, more particularly to a honeycomb structure which is resistant to a thermal shock and in which any crack is not easily developed entirely, even if the crack is generated.

### Description of the Related Art

A honeycomb structure made of ceramic is used for trapping a particulate matter such as dust contained in an exhaust gas from a car, an incineration exhaust gas or the like, and further for adsorbing and absorbing NOx, CO, HC and the like from the exhaust gas by a coated substrate. Such honeycomb structure frequently undergoes a thermal shock, when heated by a high-temperature exhaust gas or the like.

To avoid a problem of thermal shock of such honeycomb structure, there is proposed a method of forming slits beforehand in an outer peripheral wall (see, e.g., Japanese Patent Application Laid-Open No. 2001-46886).

In the method described in Japanese Patent Application Laid-Open No. 2001-46886, since the slits are formed in the outer peripheral wall of the honeycomb structure during manufacturing, there is a problem that a catalyst leaks from a slit portion, when the manufactured structure carries the catalyst. The present invention has been developed in view of the above-described problems, and an object is to provide a honeycomb structure which is capable of avoiding a problem of thermal shock and in which a crack is not easily developed entirely, even if the crack is generated and whose catalyst carrying property is satisfactory.

### SUMMARY OF THE INVENTION

To achieve the above-described object, the following honeycomb structure set out in claim 1 is provided in the present invention.

Preferably the average value (Tp) of the partition wall thicknesses is 0.038 mm ≤ Tp ≤ 0.43 mm.

Preferably the section of each cell perpendicular to the axial direction has a quadrangular shape.

It is preferable that, assuming that the region from the 0° direction (first 0° direction) to the 90° direction (first 90° direction) in the section perpendicular to the axial direction is a first region, and subsequent regions formed every 90° are second to fourth regions, respectively, at least one of the second to fourth regions satisfies the conditions 1 and/or 2.

In the honeycomb structure of the present invention, the average value (Ts) of the outer peripheral wall thickness is Tp < Ts ≤ 10 x Tp (Tp: average value of the partition wall thicknesses), and the outer peripheral wall thickness in the specific position is set to be smaller than that in the other position. Therefore, a stress during heating or cooling is moderated by the thinly formed portion of the outer peripheral wall, and the honeycomb structure is resistant to a thermal shock. Even if a crack is generated, the crack is easily generated in the thinly formed outer peripheral wall. When the crack is generated in the thin portion of the outer peripheral wall in this manner, the crack is not easily developed to the partition walls as compared with the crack which is generated in a thick portion of the outer peripheral wall. Since the outer peripheral wall does not have any missing portion such as a slit, any trouble is not caused even in a catalyst coating or the like.

### BRIEF DESCRIPTION OF THE DRAWINGS

FIG. 1 is a sectional view schematically showing a part of a section perpendicular to an axial direction of a honeycomb structure in the present invention;
FIG. 2 is a sectional view schematically showing the section perpendicular to the axial direction of the honeycomb structure in the present invention;
FIG. 3 is a perspective view schematically showing the honeycomb structure of the present invention; and
FIG. 4 is a graph showing a result of a thermal shock resistance test in an example of the honeycomb structure in the present invention.

### DESCRIPTION OF THE PREFERRED EMBODIMENT

A best mode (hereinafter referred to as the "embodiment") for carrying out the present invention will be specifically described hereinafter, but it should be understood that the present invention is not limited to the following embodiments.

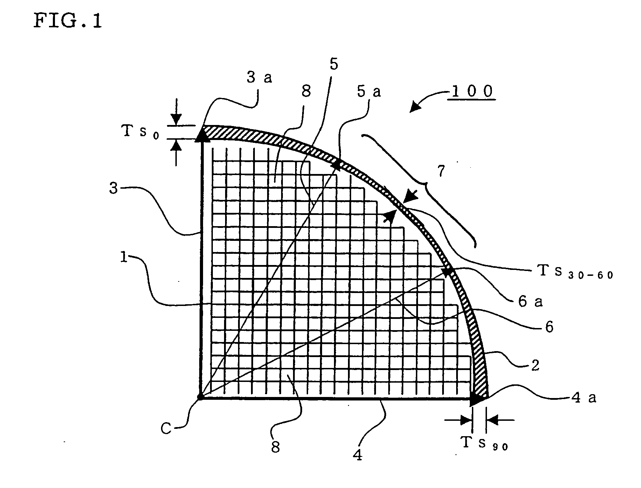

FIG. 1 is a sectional view schematically showing a part of a honeycomb structure cut along a plane perpendicular an axial direction of the structure in one embodiment of the present invention. The section cut along the plane which is perpendicular to the axial direction of the honeycomb structure will be hereinafter sometimes referred to simply as the "section perpendicular to the axial direction". A honeycomb structure 100 of the present embodiment includes: partition walls 1 formed so as to define a plurality of cells 8 extending in an axial direction; and an outer peripheral wall 2 disposed so as to surround the partition walls 1. Furthermore, an average value (Ts) of an outer peripheral wall thickness is Tp < Ts ≤ 10 × Tp (Tp: average value of partition wall thicknesses), and the outer peripheral wall thickness in a specific position is set to be smaller than that in another position. According to such constitution, a stress during heating or cooling is moderated by the thinly formed portion of the outer peripheral wall, and the honeycomb structure is resistant to a thermal shock. Even if a crack is generated, the crack is easily generated in the thinly formed outer peripheral wall. When the crack is generated in the thin portion of the outer peripheral wall in this manner, the crack is not easily developed to the partition walls as compared with the crack is generated in a thick portion of the outer peripheral wall. Since the outer peripheral wall does not have any missing portion such as a slit, any trouble is not caused even in a catalyst carrier or the like. It is to be noted that, as shown in FIG. 1, a section of each cell 8 perpendicular to the axial direction has a quadrangular shape.

The average value (Ts) of the outer peripheral wall thicknesses is preferably Tp < Ts ≤ 8 × Tp, more preferably Tp < TS ≤ 6 × Tp. When Ts is not more than Tp, an outer wall breaks under a stress from the outside, such as a stress due to canning. When the value is larger than 10 × Tp, a thermal stress generated between the partition wall and the outer peripheral wall increases.

The average value of the outer peripheral wall thicknesses is a value obtained by measuring the outer peripheral wall thicknesses every 45° from a 0° position of the outer peripheral wall, and calculating an average of eight measurements. In a case where the section is circular, the average value of the partition wall thicknesses is obtained by calculating an average of 20 partition wall thicknesses in total including: partition wall thicknesses in ten equally divided positions of a diameter connecting the 0° position to a 180° position; and those in ten equally divided positions of a diameter connecting a 90° direction to a 270° direction. In a case where the section is elliptical, the average value is obtained by calculating an average of 20 partition wall thicknesses including: partition wall thicknesses in ten equally divided positions of a long diameter; and those in ten equally divided positions of a short diameter.

As shown in FIG. 1, assuming that a direction extending to the outer peripheral wall 2 from the center C of the section perpendicular to the axial direction along one partition wall 1 is a "0° direction", and a portion of a straight line (0° direction line) 3 extending in the 0° direction, which crosses the outer peripheral wall 2, is an "outer peripheral wall 3a in the 0° direction", the honeycomb structure of the present embodiment preferably satisfies the following conditions 1 and/or 2:
Condition 1: a relation between a thickness (TS₀) of the outer peripheral wall 3a in the 0° direction and a thickness (TS₃₀₋₆₀) of the thinnest outer peripheral wall in a region 7 (region of 30° to 60° of the outer peripheral wall) from a 30° direction to a 60° direction on the basis of the 0° direction is Tp < T_{S30-60} < 0.90 × TS₀; and
Condition 2: a relation between a thickness (TS₉₀) of an outer peripheral wall 4a in a 90° direction and the thickness TS₃₀₋₆₀ is Tp < TS₃₀₋₆₀ < 0.90 × TS₉₀.

In this case, the thinnest outer peripheral wall in the region 7 of 30° to 60° of the outer peripheral wall corresponds to the thinly formed portion of the outer peripheral wall. This region is sometimes referred to as the thin wall region 7.

As the condition 1, 0.1 × Ts₀ < T_{S30-60} < 0.8 × Ts₀, is further preferable, and 0.2 × Ts₀ < TS₃₀₋₆₀ < 0.6 × Ts₀ is especially preferable. As the condition 2, 0.1 × Ts₉₀ < TS₃₀₋₆₀ < 0.8 × TS₉₀ is further preferable, and 0.2 × Ts₉₀ < TS₃₀₋₆₀ < 0.6 × TS₉₀ is especially preferable. There is not any special restriction on a position of the thinnest portion in the region 7 of 30° to 60° of the outer peripheral wall, but a position closer to a 45° direction is preferable. A width (angle) of the thinnest portion is 0° to 15°, wherein "0°" is not included.

When each cell has a square shape in the section perpendicular to the axial direction, the honeycomb structure does not easily expand or contract in a longitudinal direction (0° and 90° directions in FIG. 1) of each partition wall in the section, and the structure tends to easily expands and contracts closer to an intermediate direction (45° direction in FIG. 1). Therefore, when the honeycomb structure undergoes a thermal shock, the partition wall tends to be largely deformed closer to the intermediate direction. In a preferable mode of the honeycomb structure of the present embodiment, as described above, the thickness of the thinnest outer peripheral wall in the region (thin wall region) 7 of 30° to 60° of the outer peripheral wall is smaller than 90% of TS₀ and/or TS₉₀. Therefore, this thin wall region 7 is easily deformed centering on the thinnest portion as compared with another portion of the outer peripheral wall. As described above, when the partition wall is largely deformed centering on the intermediate direction, the thin wall region 7 brought into contact with the partition wall can also be deformed largely. Therefore, a stress due to the thermal shock is relaxed.

Therefore, in a case where either of the conditions 1 and 2 is not satisfied, the honeycomb structure sometimes becomes vulnerable to the thermal shock. Furthermore, if a crack is generated, the crack is sometimes easily developed to the partition wall.

In the honeycomb structure of the present embodiment, in FIG. 1, the region (region of 30° to 60° of the outer peripheral wall) 7 from the 30° direction to the 60° direction refers to an outer peripheral wall in a region from an outer peripheral wall 5a in the 30° direction as the portion of a straight line (30° direction line) 5 extending in the 30° direction, which crosses the outer peripheral wall 2, to an outer peripheral wall 6a in the 60° direction as the portion of a straight line (60° direction line) 6 extending in the 60° direction, which crosses the outer peripheral wall 2. The outer peripheral wall 4a in the 90° direction is a portion of a straight line (90° direction line) 4 extending in the 90° direction, which crosses the outer peripheral wall 2.

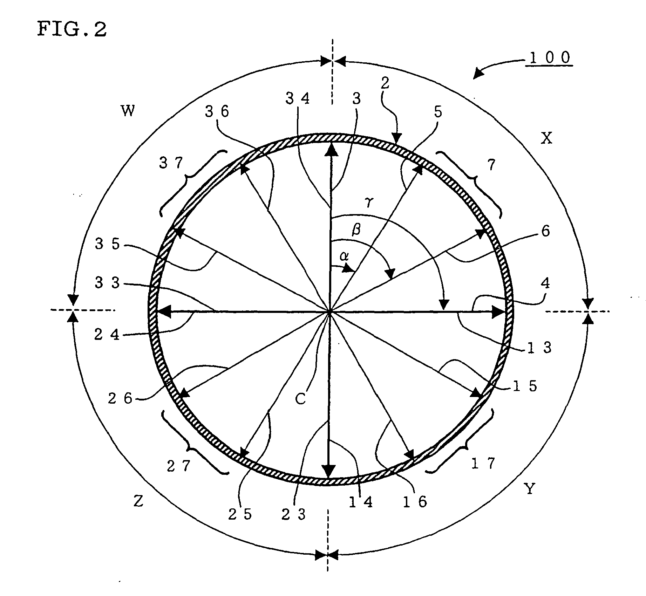

Moreover, as shown in FIG. 2, the 30° direction line 5 is a straight line which forms an angle α of 30° with respect to the 0° direction line 3, and the 60° direction line 6 is a straight line which forms an angle β of 60° with respect to the 0° direction line 3. Similarly, the 90° direction line 4 is a straight line which forms an angle γ of 90° with respect to the 0° direction line 3. The partition walls are omitted from FIG. 2.

In the honeycomb structure of the present embodiment, the average value (Tp) of the partition wall thicknesses is preferably 0.038 mm ≤ Tp ≤ 0.43 mm, more preferably 0.050 mm ≤ Tp ≤ 0.31 mm. When the value is smaller than 0.038 mm, a strength against canning sometimes remarkably lowers. When the value is larger than 0.43 mm, a pressure loss sometimes becomes excessively large.

In the honeycomb structure of the present embodiment shown in FIG. 2, assuming that the region from the 0° direction (first 0° direction) to the 90° direction (first 90° direction) in the section perpendicular to the axial direction is a first region X, and subsequent regions formed every 90° are a second region Y (region Y), a third region Z (region Z), and a fourth region W (region W), respectively, at least one of the second region Y to the fourth region W satisfies the conditions 1 and/or 2.

When not only the first thin wall region but also at least one of the second to fourth thin wall regions satisfy the conditions 1 and/or 2, the thin wall regions capable of exhibiting an effect of relaxing a stress due to a thermal shock increase. Therefore, the honeycomb structure of the present embodiment becomes more resistant to the thermal shock.

As shown in FIG. 2, the 90° direction line 4 in the region X is superimposed on a 0° direction line (second 0° direction line) 13 in the region Y, and a position of 90° from this second 0° direction line 13 is a second 90° direction line 14. The region Y is surrounded with the second 0° direction line 13 and the second 90° direction line 14. A position of 30° from the second 0° direction line 13 is a second 30° direction line 15, and a position of 60° from the second 0° direction line is a second 60° direction line 16. An outer peripheral wall positioned between the second 30° direction line 15 and the second 60° direction line 16 is a region (second thin wall region) 17 of the outer peripheral wall. Similarly, the region Z is a region surrounded with a third 0° direction line 23 and a third 90° direction line 24, and an outer peripheral wall positioned between a third 30° direction line 25 and a third 60° direction line 26 is a region (third thin wall region) 27 of 30° to 60° of the outer peripheral wall. Furthermore, similarly, the region W is a region surrounded with a fourth 0° direction line 33 and a fourth 90° direction line 34, and an outer peripheral wall positioned between a fourth 30° direction line 35 and a fourth 60° direction line 36 is a region (fourth thin wall region) 37 of 30° to 60° of the outer peripheral wall.

In the honeycomb structure of the present embodiment, an average value (Ts) of outer peripheral wall thicknesses is preferably 0.1 mm ≤ Ts ≤ 3 mm, more preferably 0.2 mm ≤ Ts ≤ 2 mm. When the value is smaller than 0.1 mm, the honeycomb structure easily breaks. When the value is larger than 3 mm, the structure is deformed, or becomes excessively heavy during manufacturing.

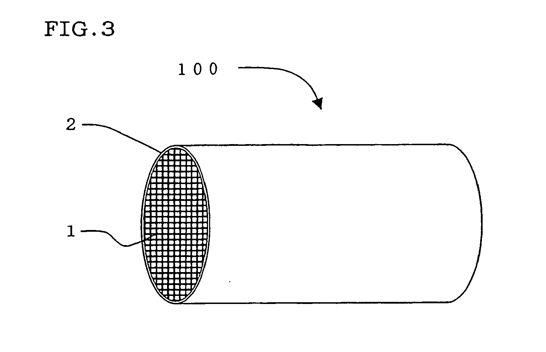

In the honeycomb structure of the present embodiment, there is not any special restriction on a shape, a size, a material or the like. In the present embodiment, as shown in FIG. 3, a honeycomb structure 100 is a columnar structure in which a plurality of cells 8 are defined by partition walls 1, and an outer peripheral wall 2 is disposed in an outer periphery of the structure so as to surround the partition walls 1. The shape is preferably columnar as shown in FIG. 3, but the shape may be a prismatic shape such as a square pole shape. As the size, in a case where the structure is, for example, columnar, the present embodiment is preferably usable in a honeycomb structure having a circle diameter of 40 to 310 mm and an axial-direction length of 10 to 310 mm. The material is preferably a ceramic, and cordierite is preferable among ceramic mat among ceramic materials. The material is preferably porous, an average pore diameter is preferably 3 to 30 µm, and a porosity is preferably 28 to 60%. The average pore diameter is a value measured by a method of "Total Pore Volume and Median Pore Diameter described in 6.3 of M505-87 Test Method of Car Exhaust Gas Purifying Catalyst Ceramic Monolith Carrier, JASO Car Standards".
The porosity is a value calculated from a pore volume. In the honeycomb structure of the present embodiment, a cell density is preferably 15 to 186 cells/cm².

Next, there will be described a method of manufacturing a honeycomb structure in the present embodiment. The honeycomb structure of the present embodiment can be obtained by: kneading predetermined forming materials to prepare a clay; forming the prepared clay to prepare a honeycomb-shaped formed body; drying the body to prepare a dried honeycomb formed body; and firing the resultant dried honeycomb formed body.

There is not any special restriction on a method of kneading the forming materials to prepare the clay, and examples of the method include a method using a kneader, a vacuum clay kneader or the like. The predetermined forming materials can be appropriately selected depending on desired materials.

There is used a forming method which has been heretofore known, extrusion forming. The method is extruding the clay prepared as described above by use of a die having a desired outer peripheral wall thickness, a desired partition wall thickness, and a desired cell density. To manufacture the honeycomb structure of the present embodiment, the outer peripheral wall thickness in a specific position needs to be set to be smaller than that in another position. This method is as follows. That is, a supply amount of the clay to a place to be thinned is reduced by changing a back hole diameter or arrangement of the die, or a shape of a pressing plate for use in forming the outer peripheral wall. Accordingly, the specific position is formed to be thin, and a difference is made in the outer peripheral wall thickness.

There is not any special restriction on a drying method, and a drying method which has heretofore been known is usable such as hot-air drying, microwave drying, dielectric drying, reduced-pressure drying, vacuum drying, or freeze-drying. Above all, a preferable drying method is a drying method obtained by combining the hot-air drying with the microwave drying or the dielectric drying, because the whole formed body can be quickly and uniformly dried. Drying conditions can be appropriately selected in accordance with the shape, the material or the like of the honeycomb formed body.

The honeycomb formed body dried by the above method is fired in a firing furnace, so that the honeycomb structure of the present embodiment can be obtained. The firing furnace and firing conditions can be appropriately selected in accordance with the shape, the material or the like of the honeycomb formed body. Calcination may be performed before the firing to burn and remove organic matters such as a binder.

### [Examples]

The present invention will be described hereinafter in more detail in accordance with examples, but the present invention is not limited to these examples.

### (Examples 1 to 6)

Alumina, talc, and kaolin were used as forming materials. These materials were kneaded with a kneader to prepare a clay.

The resultant clay was extruded into a honeycomb shape by use of a die so as to obtain a cell structure of 3.5 mil/600 cpsi ("0.09 mm"/"93 cells/cm²") and a honeycomb structure outer diameter of 143.8 mmφ. At this time, a honeycomb structures were formed so that "Ts₀:TS₃₀₋₆₀" of a portion corresponding to a first region in a section perpendicular to an axial direction, and an "average outer peripheral wall thickness (average outer wall thickness)" II of a honeycomb-shaped formed body were: 1:0.95 (average outer wall thickness of 0.20 mm) (Example 1); 1:0.90 (average outer wall thickness of 0.23 mm) (Example 2); 1:0.70 (average outer wall thickness of 0.26 mm) (Example 3); 1:0.60 (average outer wall thickness of 0.27 mm) (Example 4); 1:0.50 (average outer wall thickness of 0.30 mm) (Example 5); and 1:0.40 (average outer wall thickness of 0.31 mm) (Example 6). Next, the resultant honeycomb-shaped formed bodies were dried to prepare dried honeycomb formed bodies, and the resultant dried honeycomb formed bodies were fired to obtain honeycomb structures (Examples 1 to 6).

The honeycomb structures of Examples 1 to 6 were subjected to an isostatic strength test on the following conditions. Three types of samples having total lengths of 101.6 mm, 139.7 mm, and 152.4 mm were prepared as samples for the test from the honeycomb structure of each example. Results are shown in Table 1. Results indicate average values of three types of samples.

**[Table 1]**

| | Isostatic strength (kgf / cm²) |
|---|---|
| Example 1 | Average 38.4 |
| Example 2 | Average 46.3 |
| Example 3 | Average 38.9 |
| Example 4 | Average 50.6 |
| Example 5 | Average 62.6 |
| Example 6 | Average 52.7 |

### (Examples 7 to 12)

Honeycomb structures were prepared in the same manner as in Examples 1 to 6 except that a honeycomb structure outer diameter was set to 80.0 mmφ (Examples 7 to 12).

### (Examples 13 to 18)

Honeycomb structures were prepared in the same manner as in Examples 1 to 6 except that a honeycomb , structure outer diameter was set to 90.0 mmφ (Examples 13 to 18).

### (Examples 19 to 24)

Honeycomb structures were prepared in the same manner as in Examples 1 to 6 except that a honeycomb structure outer diameter was set to 100.0 mmφ (Examples 19 to 24).

### (Examples 25 to 30)

Honeycomb structures were prepared in the same manner as in Examples 1 to 6 except that a honeycomb structure outer diameter was set to 110.0 mmφ (Examples 25 to 30).

### (Examples 31 to 36)

Honeycomb structures were prepared in the same manner as in Examples 1 to 6 except that a honeycomb structure outer diameter was set to 132.1 mmφ (Examples 31 to 36).

### (Examples 37 to 42)

Honeycomb structures were prepared in the same manner as in Examples 1 to 6 except that a cell structure was set to 2.5 mil/900 cpsi ("0.065 mm"/"140 cells/cm²") and a honeycomb structure outer diameter was set to 76.0 mmφ (Examples 37 to 42).

### (Examples 43 to 48)

Honeycomb structures were prepared in the same manner as in Examples 37 to 42 except that a honeycomb structure outer diameter was set to 90.0 mmφ (Examples 43 to 48).

### (Examples 49 to 54)

Honeycomb structures were prepared in the same manner as in Examples 37 to 42 except that a honeycomb structure outer diameter was set to 100.0 mmφ (Examples 49 to 54).

### (Examples 55 to 60)

Honeycomb structures were prepared in the same manner as in Examples 37 to 42 except that a honeycomb structure outer diameter was set to 103.0 mmφ (Examples 55 to 60).

### (Examples 61 to 66)

Honeycomb structures were prepared in the same manner as in Examples 37 to 42 except that a honeycomb structure outer diameter was set to 105.7 mmφ (Examples 61 to 66).

### (Examples 67 to 72)

Honeycomb structures were prepared in the same manner as in Examples 37 to 42 except that a honeycomb structure outer diameter was set to 118.4 mmφ (Examples 67 to 72).

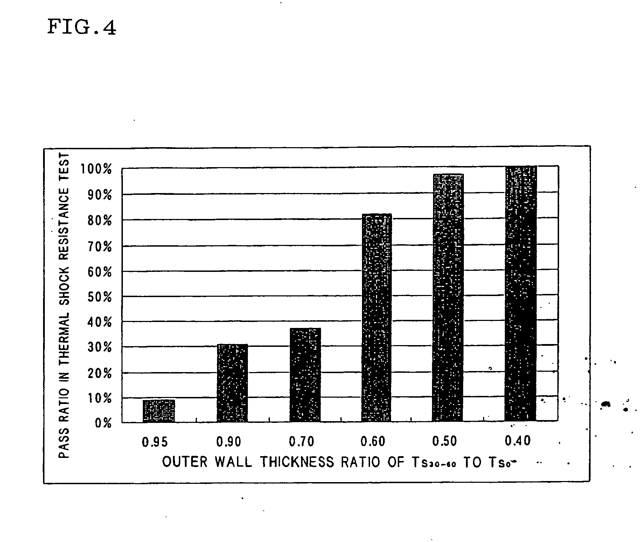

The honeycomb structures of Examples 1 to 72 were subjected to a thermal shock resistance test on the following conditions. Three types of samples having total lengths of 101.6 mm, 139.7 mm, and 152.4 mm were prepared from the.honeycomb structure of each example. Results are shown in FIG. 4.

### (Isostatic Strength Test)

An isostatic strength test was carried out in conformity with "Isostatic Strength Test" described in 6.2 of M505-87 in the test method of the car exhaust gas purifying catalyst ceramic monolith carrier of the JASO car standards. When an isostatic strength was 10.5 kgf/cm² (1.03 MPa) or more, it was judged that the sample passed the test.

### (Thermal Shock Resistance Test)

A thermal shock resistance test was carried out in conformity with "Thermal Shock Resistance Test" described in 6.7 of M505-87 in the test method of the car exhaust gas purifying catalyst ceramic monolith carrier of the JASO car standards. When any crack was not generated, it was judged that the sample passed the test. When the crack was generated in a partition wall portion, it was judged that the sample failed. Even when the crack was generated in the outer peripheral wall, it was judged that the sample passed the test. When the outer peripheral wall crack was developed to the partition wall, it was judged that the sample failed. During the test, temperature was raised every 50°C from 700°C, and the test was carried out up to 900°C (with the proviso that the test was ended in a case where the sample failed halfway). A pass ratio of the thermal shock resistance test is a ratio of the number of passed samples with respect to all of the samples in a case where a "ratio of TS₃₀₋₆₀ (outer wall thickness ratio) with respect to TS₀" had an equal value (e.g., 0.95).

It is seen from Table 1 and FIG. 4 that the honeycomb structures of Examples 1 to 72 indicate satisfactory results in either of the isostatic strength test and the thermal shock resistance test. Especially, when TS₀:TS₃₀₋₆₀ were set to 1:0.60, 1:0.50, and 1:0.40, satisfactory results were obtained. This reveals that when a thickness of an outer peripheral wall in a specific position is set to be smaller than that in another position, a thermal shock resistance can be improved while maintaining an isostatic strength.

The present invention is usable for trapping a particulate matter such as dust contained in an exhaust gas from a car, an incineration exhaust gas generated during incineration of wastes or the like, and further for adsorbing and absorbing NOx, CO, HC and the like from the exhaust gas by a coated substrate.

## Claims

1. A honeycomb structure comprising:
partition walls (1) formed so as to define a plurality of cells (8) extending in an axial direction; and
an outer peripheral wall (2) disposed so as to surround the partition walls,
the honeycomb structure comprising said partition walls (1) and said peripheral wall (2) being obtained by extrusion forming of a clay to form a honeycomb-shaped formed body including both partition walls and peripheral wall using a die having a desired outer peripheral wall thickness, a desired cell density, followed by drying and firing of said honeycomb-shaped formed body thereby obtaining said honeycomb structure having said partition walls (1) and said outer peripheral wall (2),
wherein an average value (Ts) of thicknesses of said outer peripheral wall (2) satisfies the following relation:
Tp < Ts ≤ 10 x Tp, wherein Tp is an average value of thicknesses of the partition walls (1), and
wherein, assuming that a direction extending to said outer peripheral wall (2) from the center of the axial end face of the honeycomb structure parallel to the partition walls is a "0° direction" and the length of a straight line extending in the 0° direction which crosses the outer peripheral wall is the "thickness (Tsₒ) of the outer peripheral wall in the 0° direction", the following conditions 1 and/or 2 are satisfied:
Condition 1: a relation between the thickness (Ts₀) of said outer peripheral wall (2) in the 0° direction and a thickness (Ts₃₀₋₆₀) of the thinnest outer peripheral wall in a region from a 30° direction to a 60° direction on the basis of the 0° direction is Tp < Ts₃₀₋₆₀ < 0.90 x Ts₀; and
Condition 2: a relation between a thickness (Ts₉₀) of said outer peripheral wall (2) in a 90° direction on the basis of the 0° direction and the thickness TS₃₀₋₆₀ is Tp < Ts₃₀₋₆₀ < 0.90 x Ts₉₀, and
wherein the angular width of the thinnest outer peripheral wall in the region from a 30° direction to a 60° direction is greater than 0° and less than or equal to 15°.

2. The honeycomb structure according to claim 1, wherein the average value (Tp) of the partition wall thicknesses is 0.038 mm ≤ Tp ≤ 0.43 mm.

3. The honeycomb structure according to claim 2 wherein the average value (Tp) of the partition wall thickness is 0.050 mm ≤ Tp ≤ 0.31 mm.

4. The honeycomb structure according to claim 1, 2 or 3, wherein a section of each cell perpendicular to an axial direction has a quadrangular shape.

5. The honeycomb structure according to any one of claims 1 to 4, wherein assuming that the region from the 0° direction (first 0° direction) to the 90° direction (first 90° direction) in the section perpendicular to the axial direction is a first region, and subsequent regions formed every 90° are second to fourth regions, respectively, at least one of the second to fourth regions satisfies the conditions 1 and/or 2.

6. The honeycomb structure according to any one of the preceding claims wherein, in Condition 1, 0.1 x Tsₒ < TS₃₀₋₆₀ < 0.8 x Tsₒ and/or, in Condition 2, 0.1 x Ts₉₀ < TS₃₀₋₆₀ < 0.8 x Ts₉₀.

7. The honeycomb structure according to claim 6 wherein, in Condition 1, 0.2 x Tsₒ < Ts₃₀₋₆₀ < 0. 6 x Tsₒ and/or, in Condition 2, 0.2 x Ts₉₀ < Ts₃₀₋₆₀ < 0.6 x Ts₉₀.

8. The honeycomb structure of any one of the preceding claims wherein the average value (Ts) of thickness of the outer peripheral wall is 0.1 mm ≤ Ts ≤ 3 mm.

9. The honeycomb structure of claim 8 wherein the average value (Ts) of thickness of the outer peripheral wall is 0.2 mm ≤ Ts ≤ 2 mm.

## Patentansprüche

1. Wabenstruktur, die Folgendes umfasst:
Trennwände (1), die ausgebildet sind, um eine Vielzahl an Zellen (8) zu definieren, die sich in axialer Richtung erstrecken; und
eine äußere Umfangswand (2), die angeordnet ist, um die Trennwände zu umgeben,
wobei die Wabenstruktur, die die Trennwände (1) und die Umfangswand (2) umfasst, wie folgt erhalten wird: durch Extrusionsformen eines Tons zur Ausbildung eines Wabenformkörpers, der sowohl Trennwände als auch eine Umfangswand umfasst, unter Verwendung einer Düse mit einer gewünschten Außenumfangswanddicke, einer gewünschten Trennwanddicke und einer gewünschten Zelldichte, gefolgt vom Trocknen und Brennen des wabenförmigen Formkörpers, wodurch die Wabenstruktur mit den Trennwänden (1) und der Außenumfangswand (2) erhalten wird,
wobei der Mittelwert (Ts) der Dicke der Außenumfangswand (2) folgende Beziehung erfüllt:
Tp < Ts ≤ 10 x Tp, worin Tp der Mittelwert der Dicke der Trennwände (1) ist, und
wobei unter der Annahme, dass eine Richtung, die sich vom Mittelpunkt der axialen Endfläche der Wabenstruktur parallel zu den Trennwänden zu der Außenumfangswand (2) erstreckt, eine "0°-Richtung" ist und die Länge einer geraden Linie, die sich in die 0°-Richtung erstreckt und die Außenumfangswand schneidet, die "Dicke (Ts₀) der Außenumfangswand in der 0°-Richtung" ist, die folgenden Bedingungen 1 und/oder 2 erfüllt werden:
Bedingung 1: die Beziehung zwischen der Dicke (Ts₀) der Außenumfangswand (2) in der 0°-Richtung und der Dicke (Ts₃₀₋₆₀) der dünnsten Außenumfangswand in einem Bereich von einer 30°-Richtung zu einer 60°-Richtung ausgehend von der 0°-Richtung Tp < Ts₃₀₋₆₀ < 0,90 x Ts₀ ist; und
Bedingung 2: die Beziehung zwischen der Dicke (Ts₉₀) der Außenumfangswand (2) in einer 90°-Richtung ausgehend von der 0°-Richtung und der Dicke Ts₃₀₋₆₀ Tp < Ts₃₀₋₆₀ < 0,90 x Ts₉₀ ist, und
wobei die Winkelbreite der dünnsten Umfangswand im Bereich von der 30°-Richtung bis zu der 60°-Richtung größer als 0° und geringer oder gleich 15° ist.

2. Wabenstruktur nach Anspruch 1, worin der Mittelwert (Tp) der Trennwanddicke 0,038 mm ≤ Tp ≤ 0,43 mm ist.

3. Wabenstruktur nach Anspruch 2, worin der Mittelwert (Tp) der Trennwanddicke 0,050 mm ≤ Tp ≤ 0,31 mm ist.

4. Wabenstruktur nach Anspruch 1, 2 oder 3, worin ein Abschnitt jeder Zelle im rechten Winkel auf die Achsenrichtung eine viereckige Form aufweist.

5. Wabenstruktur nach einem der Ansprüche 1 bis 4, worin unter der Annahme, dass der Bereich von der 0°-Richtung (erste 0°-Richtung) zu der 90°-Richtung (erste 90°-Richtung) in dem Abschnitt, der im rechten Winkel auf die Achsenrichtung steht, ein erster Bereich ist und die folgenden Bereiche, die alle 90° ausgebildet sind, dem zweiten bis vierten Bereich entsprechen, wobei zumindest einer der zweiten bis vierten Bereiche die Bedingung 1 und/oder 2 erfüllt.

6. Wabenstruktur nach einem der vorangegangenen Ansprüche, worin in Bedingung 1 gilt 0,1 x Ts₀ < Ts₃₀₋₆₀ < 0,8 x Ts₀ und/oder in Bedingung 2 gilt 0,1 x Ts₉₀ < Ts₃₀₋₆₀ < 0,8 x TS₉₀.

7. Wabenstruktur nach Anspruch 6, worin in Bedingung 1 gilt 0,2 x Ts₀ < Ts₃₀₋₆₀ < 0,6 x Ts₀ und/oder in Bedingung 2 gilt 0,2 x Ts₉₀ < Ts₃₀₋₆₀ < 0,6 x Ts₉₀.

8. Wabenstruktur nach einem der vorangegangenen Ansprüche, worin der Mittelwert (Ts) der Dicke der Außenumfangswand 0,1 mm ≤ Ts ≤ 3 mm beträgt.

9. Wabenstruktur nach Anspruch 8, worin der Mittelwert (Ts) der Dicke der Außenumfangswand 0,2 mm ≤ Ts ≤ 2 mm beträgt.

## Revendications

1. Structure en nid d'abeilles comprenant :
des parois de séparation (1) formées de façon à définir une pluralité de cellules (8) s'étendant dans une direction axiale ; et
une paroi périphérique extérieure (2) disposée de façon à entourer les parois de séparation,
la structure en nid d'abeilles comprenant lesdites parois de séparation (1) et ladite paroi périphérique (2) étant obtenue par formage par extrusion d'une argile pour former un corps façonné en forme de nid d'abeilles contenant tant les parois de séparation que la paroi périphérique par utilisation d'une filière ayant une épaisseur de paroi périphérique extérieure souhaitée, une épaisseur de paroi de séparation souhaitée et une densité d'alvéoles souhaitée, suivie d'un séchage et d'une calcination dudit corps façonné en forme de nid d'abeilles, donnant ainsi ladite structure en nid d'abeilles ayant lesdites parois de séparation (1) et ladite paroi périphérique extérieure (2),
dans laquelle la valeur moyenne (Ts) des épaisseurs de ladite paroi périphérique extérieure (2) satisfait à la relation suivante :
Tp < Ts ≤ 10 x Tp, où Tp est la valeur moyenne des épaisseurs des parois de séparation (1), et
dans laquelle, en supposant que la direction s'étendant vers ladite paroi périphérique extérieure (2) depuis le centre de la face d'extrémité axiale de la structure en nid d'abeilles parallèle aux parois de séparation est la "direction 0°", et que la longueur d'une ligne droite s'étendant dans la direction à 0° qui traverse la paroi périphérique extérieure est "l'épaisseur (Ts₀) de la paroi périphérique extérieure dans la direction à 0°", les conditions 1 et/ou 2 suivantes sont satisfaites :
condition 1 : la relation entre l'épaisseur (Ts₀) de ladite paroi périphérique extérieure (2) dans la direction à 0° et l'épaisseur (Ts₃₀₋₆₀) de la paroi périphérique extérieure la plus mince dans une région allant d'une direction à 30° à une direction à 60° par rapport à la direction à 0°, est Tp < TS₃₀₋₆₀ < 0,90 x Ts₀ ; et
condition 2 : la relation entre l'épaisseur (Ts₉₀) de ladite paroi périphérique extérieure (2) dans une direction à 90° par rapport à la direction à 0° et l'épaisseur Ts₃₀₋₆₀ est Tp < Ts₃₀₋₆₀ < 0,90 x Ts₉₀, et
dans laquelle la largeur angulaire de la paroi périphérique extérieure la plus mince dans la région allant d'une direction à 30° à une direction à 60° est supérieure à 0° et inférieure ou égale à 15°.

2. Structure en nid d'abeilles selon la revendication 1, dans laquelle la valeur moyenne (Tp) des épaisseurs de paroi de séparation est 0,038 mm ≤ Tp ≤ 0,43 mm.

3. Structure en nid d'abeilles selon la revendication 2, dans laquelle la valeur moyenne (Tp) de l'épaisseur de paroi de séparation est 0,050 mm ≤ Tp ≤ 0,31 mm.

4. Structure en nid d'abeilles selon la revendication 1, 2 ou 3, dans laquelle une section de chaque alvéole perpendiculaire à la direction axiale a une forme quadrangulaire.

5. Structure en nid d'abeilles selon l'une quelconque des revendications 1 à 4, dans laquelle, en supposant que la région allant de la direction à 0° (première direction à 0°) à la direction à 90° (première direction à 90°) dans la section perpendiculaire à la direction axiale est une première région, et les régions subséquentes formées tous les 90° sont les deuxième à quatrième régions respectivement, au moins l'une parmi les deuxième à quatrième régions satisfait aux conditions 1 et/ou 2.

6. Structure en nid d'abeilles selon l'une quelconque des revendications précédentes, dans laquelle, dans la condition 1, 0,1 x Ts₀ < Ts₃₀₋₆₀ < 0,8 x Ts₀ et/ou, dans la condition 2, 0,1 x Ts₉₀ < TS₃₀₋₆₀ < 0,8 x Ts₉₀.

7. Structure en nid d'abeilles selon la revendication 6, dans laquelle, dans la condition 1, 0,2 x Ts₀ < Ts₃₀₋₆₀ < 0,6 x Ts₀ et/ou, dans la condition 2, 0,2 x Ts₉₀ < Ts₃₀₋₆₀ < 0,6 x Ts₉₀.

8. Structure en nid d'abeilles selon l'une quelconque des revendications précédentes, dans laquelle la valeur moyenne (Ts) d'épaisseur de la paroi périphérique extérieure est 0,1 mm ≤ Ts ≤ 3 mm.

9. Structure en nid d'abeilles selon la revendication 8, dans laquelle la valeur moyenne (Ts) d'épaisseur de la paroi périphérique extérieure est 0,2 mm ≤ Ts ≤ 2 mm.
